# EUROPÄISCHE PATENTSCHRIFT

(11) **EP 3 525 445 B1**
(45) Veröffentlichungstag und Bekanntmachung des Hinweises auf die Patenterteilung: **20.05.2020**
(21) Anmeldenummer: 18214445.1
(22) Anmeldetag: 20.12.2018
(51) Int. Cl.: H04N 5/225, G06K 7/10, G02B 7/04, G03B 3/00

(54) **KAMERA UND VERFAHREN ZUR FOKUSVERSTELLUNG**
CAMERA AND METHOD FOR FOCUS ADJUSTMENT
CAMÉRA ET PROCÉDÉ DE RÉGLAGE DE LA MISE AU POINT

(30) Priorität: 09.02.2018 DE 102018102917
(43) Veröffentlichungstag der Anmeldung: 14.08.2019
(73) Patentinhaber: SICK AG, 79183 Waldkirch (DE)
(72) Erfinder: Schneider, Florian, 79276 Reute (DE); Pfrengle, Thomas, 79258 Hartheim (DE)

(56) Entgegenhaltungen:
- US-A1- 2009 086 312
- US-A1- 2010 176 319
- US-A1- 2012 014 688

## Beschreibung

Die Erfindung betrifft eine Kamera und ein Verfahren zur Fokusverstellung nach dem Oberbegriff von Anspruch 1 beziehungsweise 14.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Um Strukturen in unterschiedlichen Abständen zu erfassen und Codes lesen zu können, muss die Fokusposition der Kamera eingestellt oder umgangssprachlich das Bild scharf gestellt werden. Dafür gibt es unterschiedliche Technologien. Typischerweise wird die Position des Objektivs verändert, also der Abstand zwischen Objektiv und Bildsensor, um eine Umfokussierung zu erzielen. Oftmals geschieht dies automatisch, etwa mit Hilfe eines Schrittmotors. Gerade für einfachere Kameras oder solche, bei denen die Fokuslage über längere Betriebszeiten konstant bleiben kann, ist aber auch eine manuelle Fokusverstellung keineswegs unüblich.

Die EP 2 498 113 A1 schlägt eine Fokusverstellung mit Hilfe einer motorgetriebenen Kurvenscheibe und einer Parallelführung des Objektivs vor. Die Kurvenscheibe ließe sich im Prinzip auch von Hand drehen. Die Parallelführung jedoch ist aufwändig und benötigt außerdem viel Bauraum.

Alternativ ist bekannt, die Fokuslage durch Drehbewegung in einem Gewinde zu verstellen. Dadurch ist der Platzbedarf optimiert, aber es ergeben sich andere Probleme. Um eine Schutzklasse wie IP54, IP65 oder IP67 einzuhalten, muss sich eine Schutzhaube oder Gerätefrontscheibe über dem Objektiv befinden. Dann muss aber für jeden Umfokussierungsvorgang die Schutzhaube abgenommen werden, um das Objektiv drehen zu können. Außerdem ist die Visualisierung der Fokusposition bei einem Gewinde schwierig. Es lassen sich zwar entsprechende Markierungen auf dem Objektiv anbringen. Gerade bei langbrennweitigen Objektiven mit einem großen Fokusverstellbereich ist aber ein großer Objektivhub notwendig, und dafür werden mehrere Gewindeumdrehungen benötigt. Diese Mehrdeutigkeit ist nur mit großen Schwierigkeiten und jedenfalls nicht mit einfachen Markierungen in einer unmittelbar erfassbaren Weise auf dem Objektiv zu visualisieren.

Aus der US 9 591 299 B2 ist eine Überwachungskamera mit einem manuell verstellbaren Fokus bekannt. Zum Einstellen der Fokuslage greift ein Werkzeug von außen auf einen nicht weiter beschriebenen indirekten Verstellmechanismus ein.

In der US 2015/0103223 A1 wird eine Kamera mit einer Livebildanzeige beschrieben. In einer grafischen Benutzerführung zur manuellen Fokusverstellung werden ein aus einer Messung berechneter Zielfokus und ein aktuell eingestellter Fokus angezeigt. Die eigentliche Verstellbewegung erfolgt ganz herkömmlich mittels eines Fokusrings oder eines Knopfes. Durch die Anzeige für das Livebild ist ein solches Konzept für einfache Kameras nicht geeignet. Außerdem würde eine bestimmte Schutzklasse nur mit zusätzlichen, nicht erläuterten Abdichtungsmaßnahmen eingehalten, wie etwa eine für jede Umfokussierung abzunehmende Schutzhaube.

Die US 2010/0176319 A1 offenbart ein modulares Fokussystem für einen kamerabasierten Codeleser mit einem von Hand drehbaren Fokusring.

Aus der US 2009/0086312 A1 ist eine Bildaufnahmevorrichtung mit einer Fokussieranordnung bekannt, bei zwei ineinandergesteckte Tuben mit Hilfe einer helixförmigen Nut durch Drehen in ihrer Längsrichtung verschoben werden.

Die US 2012/0014688 A1 zeigt eine Bildaufnahmevorrichtung mit einem Frontgehäuse, das eine kreisförmige Öffnung für ein Linsenmodul aufweist.

Es ist daher Aufgabe der Erfindung, eine verbesserte Fokusverstellung für eine Kamera anzugeben.

Diese Aufgabe wird durch eine Kamera und ein Verfahren zur Fokusverstellung nach Anspruch 1 beziehungsweise 14 gelöst. Die Kamera umfasst einen Bildsensor mit einer Empfangsoptik. Deren Fokus lässt sich über einen Gewindemechanismus verstellen, indem eine Drehbewegung der Empfangsoptik den Abstand zu dem Bildsensor verändert. Eine Frontscheibe schließt die Kamera beziehungsweise deren Gehäuse auf der Vorderseite, also in Blickrichtung der Kamera, und schützt dadurch beispielsweise eine Beleuchtungseinheit der Kamera, deren Licht durch die Frontscheibe hindurch den Erfassungsbereich beleuchtet. Darüber hinaus sollten Ausführungsformen und Aspekte, die nicht durch die Ansprüche abgedeckt sind, nicht als Ausführungsformen der Erfindung, sondern als Beispiele zum Verständnis der Erfindung ausgelegt werden.

Die Erfindung geht nun von dem Grundgedanken aus, die Empfangsoptik quasi durch die Frontscheibe hindurch verdrehen und damit den Fokus manuell verstellen zu können. Dazu ist die Empfangsoptik in ihrem vorderen oder äußeren Bereich mit einer Innenkontur versehen. So kann ein passendes Werkzeug von außen in die Innenkontur eingreifen und die Empfangsoptik mit dem Werkzeug in dem Gewinde verdreht werden.

Die Erfindung hat den Vorteil, dass die auf einem Gewinde basierende Fokusverstellung sehr einfach und platzsparend bleibt und so eine miniaturisierte Kamera entstehen kann. Aufwändige Komponenten wie eine Anzeige für ein Livebild sollen dabei nicht erforderlich sein. Die Verstellung über eine Innenkontur an der Empfangsoptik ohne Öffnen der Frontscheibe ermöglicht das Einhalten einer Geräteschutzklasse, wie IP54, IP65 oder IP67, und dennoch eine stets zugängliche, schnelle und einfache Umfokussierung. Der Aufbau sorgt außerdem für eine integrierte optische Kanaltrennung, bei dem der Empfangsweg vor optischem Übersprechen einer eigenen aktiven Beleuchtung der Kamera geschützt ist.

Die Frontscheibe weist bevorzugt eine Öffnung auf, so dass die Innenkontur frei von außen zugänglich ist. Das hat gleich mehrere Vorteile. Einmal bleibt die Innenkontur stets offen für das Werkzeug erreichbar. Es ist also nicht erforderlich, vor jeder Umfokussierung die Frontscheibe zu öffnen, eine Objektivschutzklappe abzunehmen oder dergleichen. Außerdem ist eine günstige Frontscheibe einsetzbar, die beispielsweise aus Kunststoff mit geringeren optischen Anforderungen hergestellt ist, da der Durchtrittsbereich des Empfangslichts zu dem Empfangsobjektiv ausgespart bleibt, wo deutlich erhöhte optische Anforderungen bestehen.

Die Empfangsoptik ist bevorzugt abgedichtet in der Öffnung angeordnet. Dazu dient beispielsweise ein Dichtungsring zur Frontscheibe im Außenumfang der Empfangsoptik. Dies ist eine mögliche Maßnahme, um trotz einer Öffnung in der Frontscheibe und der ständigen Zugänglichkeit der Innenkontur von außen eine gewünschte Schutzklasse zu erhalten.

Die Empfangsoptik weist bevorzugt ein Schutzelement zwischen Innenkontur und optischen Elementen auf. Das Schutzelement, vorzugsweise ein Schutzglas oder ein entsprechendes Kunststoffelement, schließt den Innenraum der Kamera ab, die so einfacher eine bestimmte Schutzklasse einhält. Die Innenkontur zum Verstellen der Fokuslage liegt außen und damit frei zugänglich, während die eigentliche Empfangsoptik geschützt bleibt, d.h. deren optische Elemente wie Linsen und dergleichen. Das Schutzelement kann eine hohe optische Qualität aufweisen und bleibt auch während einer Fokusverstellung an seinem Platz.

Die Kamera weist vorzugsweise eine Fokuspositionsmesseinheit zur Bestimmung der aktuellen Position der Empfangsoptik auf. Die Fokuspositionsmesseinheit liefert einen Messwert für die aktuelle Stellung der Empfangsoptik. Der eigentlich interessante Messwert ist der Abstand zwischen Empfangsoptik und Bildsensor, also die tatsächliche Fokuslage. Dazu kann die Drehstellung der Empfangsoptik in dem Gewinde, vorzugsweise unter Berücksichtigung von mehreren vollständigen Drehungen, oder gleichwertig direkt der Versatz längs der optischen Achse der Empfangsoptik gemessen werden.

Die Fokuspositionsmesseinheit weist bevorzugt ein Magnetelement, vorzugsweise einen Magnetstreifen, und einen Hallsensor auf. Das Magnetelement vollzieht die Hinund Herbewegung der Empfangsoptik bei Fokusverstellungen mit, der Hallsensor nicht. Die Relativbewegung kann auch durch umgekehrte Anordnung entstehen, aber dann müsste ein beweglicher Hallsensor versorgt und angesteuert werden. Der Hallsensor ist vorzugsweise ein hochintegrierter Baustein samt zugehöriger Elektronik, der direkt Positionswerte ausgibt.

Die Fokuspositionsmesseinheit weist bevorzugt ein Schlittenelement mit dem Magnetelement auf, wobei das Schlittenelement am Umfang der Empfangsoptik angeordnet und axial von hinten mit einer Federkraft an die Empfangsoptik gedrückt ist. Die Empfangsoptik weist vorzugsweise in ihrem vorderen Bereich einen größeren Radius auf, so dass eine Art Rückwand entsteht, an die das Schlittenelement von innen her angedrückt werden kann. Das federkraftbelastete und geführte Schlittenelement sorgt dafür, dass die Empfangsoptik das Magnetelement bei Verstellbewegungen in beiden Richtungen möglichst ohne Schlupf mitnimmt

Die Kamera weist bevorzugt eine Abstandsmesseinheit zur Bestimmung des Abstands zu einem aufzunehmenden Objekt auf. Aus den Messwerten der Abstandsmesseinheit wird eine benötigte Fokuslage bestimmt, mit der die Empfangsoptik auf das aufzunehmende Objekt scharf gestellt ist.

Die Abstandsmesseinheit weist bevorzugt einen Lichtsender, einen Lichtempfänger und eine Lichtlaufzeitmesseinheit zur Bestimmung der Lichtlaufzeit eines ausgesandten und wieder empfangenen Lichtsignals auf. So wird der Abstand über ein Lichtlaufzeitverfahren, insbesondere ein Puls-, Pulsmittelungs- oder Phasenverfahren bestimmt. Die Abstandsmesseinheit ist vorzugsweise hochintegriert und gibt direkt Abstandswerte aus.

Die Kamera weist bevorzugt eine erste Anzeigeeinheit für eine Anzeige einer benötigten Fokuslage und/oder eine zweite Anzeigeeinheit für eine Anzeige einer aktuellen Position der Empfangsoptik auf. So wird die tatsächliche und/oder benötigte Fokuslage visualisiert. Vorzugsweise werden die jeweiligen Messwerte der Abstandsmesseinheit und der Fokusmesspositionseinheit angezeigt. Die Messwerte müssen möglicherweise noch umgerechnet und linear oder nichtlinear reskaliert werden. Anstelle der Anzeige von Messwerten ist prinzipiell auch denkbar, Werkseinstellungen oder Parameter bestimmter Betriebsmodi anzuzeigen.

Die erste Anzeigeeinheit und/oder die zweite Anzeigeeinheit weist bevorzugt eine Lichtleiste auf. Unter einer Lichtleiste wird eine an mehreren Orten beleuchtbare Anordnung verstanden, wobei der jeweilige Ort verschiedene aufsteigende Werte einer skalaren Messgröße visualisiert, hier der Fokuslage. Ein Umsetzungsbeispiel ist eine Reihenanordnung von Lichtquellen, insbesondere LEDs, die jeweils an dem Ort aufleuchtet, der am ehesten den Messwert repräsentiert. Gleichwertige Lichtmuster sind ebenso denkbar, etwa ein Leuchten bis zu dem zum Messwert passenden Ort, ab diesem Ort oder überall und gerade nicht an diesem Ort. Durch die Lichtleiste entsteht eine einfache Anzeige, die dennoch eine Vielzahl von Fokuspositionen sofort intuitiv erkennen lässt und so eine sehr einfache und schnelle Inbetriebnahme oder Anpassung der Kamera erlaubt. Im Gegensatz zu Markierungen an einem Gewinde gibt es auch keine Mehrdeutigkeit, wenn die Empfangsoptik für den abzudeckenden Fokusbereich mehr als eine vollständige Objektivumdrehung benötigt. Der Aufwand für eine Bildanzeige eines Livebildes samt Benutzerschnittstelle dafür entfällt.

Erste Anzeigeeinheit und zweite Anzeigeeinheit sind bevorzugt mit vergleichbarer Skalierung in gegenseitiger Nachbarschaft angeordnet. Dadurch wird für den Benutzer sofort eine noch vorhandene Diskrepanz zwischen benötigter und tatsächlicher Fokuslage erfassbar. Die richtige Fokuslage wird ganz einfach durch Drehen der Empfangsoptik mit einem Werkzeug in deren Innenkontur eingestellt, bis beide Anzeigen übereinstimmen. Vorzugsweise sind die beiden Anzeigeeinheiten untereinander angeordnete identische Lichtleisten, die sich möglicherweise noch in ihrer Farbe unterscheiden. Im Prinzip codiert aber auch schon die Lage der Lichtleisten, ob sie für die benötigte oder die tatsächliche Fokuslage zuständig sind, beziehungsweise dies kann statt über die Farbe der Lichtleiste auch durch eine Beschriftung angezeigt werden. Es ist im Übrigen auch denkbar, dass eine einzige Lichtleiste beide Anzeigeeinheiten bildet. Dann wird die Fokuslage so lange verstellt, bis nur noch ein dann übereinstimmender Ort gemeinsam die tatsächliche und die benötigte Fokuslage anzeigt. Etwas komfortabler ist dies mit mehrfarbigen LEDs denkbar, etwa rot für die tatsächliche, blau für die benötigte Fokuslage und eventuell noch grün bei einer Übereinstimmung.

Eine Skala zeigt bevorzugt Einheiten für die durch die erste Anzeigeeinheit und/oder die zweite Anzeigeeinheit dargestellten Fokuslagen an. Somit sind nicht lediglich relative, sondern auch absolute Fokuslagen ablesbar. Vorzugsweise ist nur eine Skala für beide Anzeigeeinheiten vorhanden, die dann für eine direkte Vergleichbarkeit in gleichen Einheiten arbeiten. Es genügt insbesondere ein fixer Aufdruck für die Skala, welcher den Positionen einer Lichtleiste eine Einheit zuordnet.

Die Kamera weist bevorzugt eine Steuer- und Auswertungseinheit auf, die dafür ausgebildet ist, in den Bilddaten Codebereiche zu identifizieren und deren Codeinhalt auszulesen. Damit wird die Kamera zu einem kamerabasierten Codeleser für Barcodes und/oder 2D-Codes nach diversen Standards, gegebenenfalls auch für eine Texterkennung (OCR, Optical Character Reading). Eine Steuer- und Auswertungseinheit ist im Übrigen vorzugsweise auch ohne Codelesefunktionalität vorgesehen, welche die diversen Aufgaben in der Kamera steuert und ausführt, wie die Bildaufnahme, eine Beleuchtung, die Messung von tatsächlicher und benötigter Fokuslage und deren Anzeige.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Bevorzugt werden eine benötigte Fokuslage als Abstand zu einem aufzunehmenden Objekt und eine tatsächliche Fokuslage als Position der Empfangsoptik gemessen und angezeigt, und die tatsächliche Fokuslage wird durch Drehen der Empfangsoptik in dem Gewinde verändert, bis tatsächliche Fokuslage und benötigte Fokuslage übereinstimmen. Das ist besonders einfach erkennbar, wenn beide Anzeigen über gleichartige Lichtleisten erfolgen, die dann durch Drehen der Empfangsoptik in Übereinstimmung gebracht werden. Damit gelingt eine zuverlässige, benutzerfreundliche manuelle Fokussierung, bei der die Kamera nicht geöffnet werden muss und daher mit einfachen Mitteln eine Geräteschutzklasse einhält.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera mit Fokusverstellung von oben;
- Fig. 2: eine Vorderansicht der Kamera;
- Fig. 3: eine dreidimensionale Schnittansicht der Kamera von der Seite;
- Fig. 4: eine dreidimensionale Ansicht einer Empfangsoptik mit Fokuspositionsmesseinheit;
- Fig. 5: eine dreidimensionale Ansicht einer alternativen Fokuspositionsmesseinheit;
- Fig. 6: eine schematische Darstellung einer Anzeige für gemessene und benötigte Fokusposition; und
- Fig. 7: eine dreidimensionale Ansicht einer beispielhaften Anwendung einer Kamera in Montage an einem Förderband.

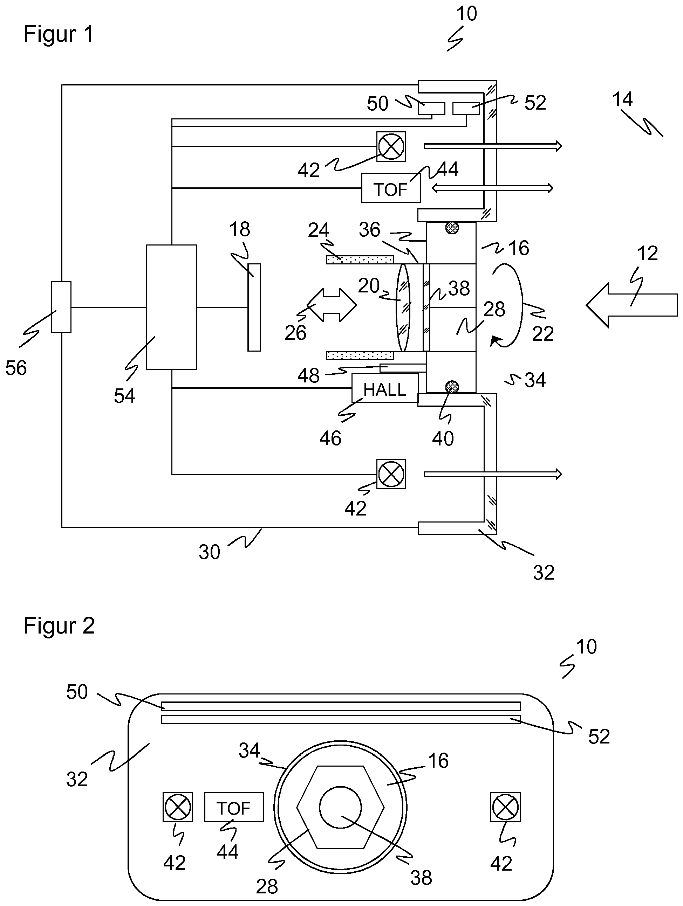

Figur 1 zeigt eine schematische Schnittdarstellung einer Kamera 10. Empfangslicht 12 aus einem Erfassungsbereich 14 trifft auf eine Empfangsoptik 16, die das Empfangslicht 12 auf einen Bildsensor 18 führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse 20 repräsentiert.

Die Kamera 10 besitzt eine manuelle Fokusverstellung. Wie durch einen ersten Pfeil 22 angedeutet, ist die Empfangsoptik 16 in einem nur schematisch dargestellten Gewinde 24 drehbeweglich und verschiebt sich dadurch entsprechend einem zweiten Pfeil 26 längs ihrer optischen Achse hin und her. Der dabei veränderte Abstand zwischen Empfangsoptik 16 und Bildsensor 18 bewirkt eine Umfokussierung.

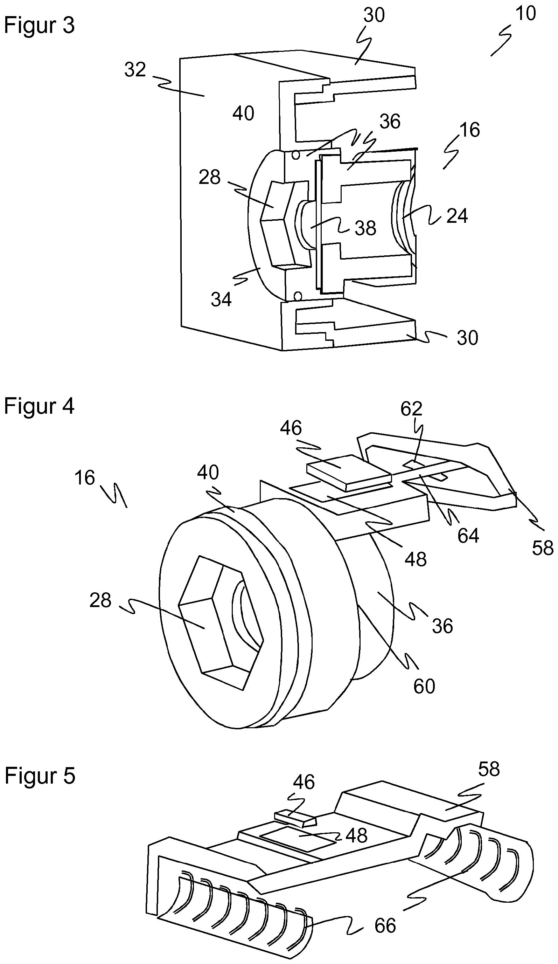

Um die Empfangsoptik 16 verdrehen zu können, ist in ihrem äußeren oder vorderen Bereich eine Innenkontur 28 vorgesehen. Diese Innenkontur 28 ist besser in einer Vorderansicht gemäß Figur 2 oder einer seitlichen dreidimensionalen Schnittansicht gemäß Figur 3 erkennbar, auf die auch hinsichtlich weiterer Merkmale der Kamera 10 ergänzend verwiesen wird.

In dem dargestellten Ausführungsbeispiel ist die Innenkontur 28 ein Innensechskant, wo der Eingriff durch ein passendes Werkzeug ohne besonderen Krafteinsatz eine genaue Drehbewegung erlaubt. Die Erfindung ist aber darauf nicht beschränkt. Zunächst sind auch andere Konturen mit einer beliebigen anderen Anzahl als sechs Kanten denkbar, weiterhin ein Kreuzschlitz, ein Stern oder ein anderes Muster. Die Kontur könnte auch zu einer Geldmünze oder einem anderen standardisierten, fast immer verfügbaren Gegenstand passen. Die Ecke einer Kreditkarte beispielsweise könnte wie ein Schlitzschraubenzieher verwendet werden. Wichtig ist ein zuverlässiger Eingriff zum Ausüben eines ausreichenden Drehmoments, mit dem die Empfangsoptik 16 genau in eine gewünschte Drehposition gebracht wird. Daher ist eine komplexere Kontur als nur ein Schlitz bevorzugt. Als weitere Alternative ist auch denkbar, die Empfangsoptik 16 anders als in Figur 1 ein kleines Stück aus der Kamera 10 hinausragen zu lassen und in ihrem Außenumfang eine Kontur beispielsweise für den Eingriff einer flach angesetzten Kreditkarte vorzusehen.

Die Kamera 10 wird durch ein Gehäuse 30 geschützt, das im vorderen Bereich, wo das Empfangslicht 12 einfällt, durch eine Frontscheibe 32 abgeschlossen ist. Die Frontscheibe 32 wiederum weist eine Öffnung 34 auf, die mit der Empfangsoptik 16 verschlossen wird. Die Frontscheibe 32 ist in diesem Ausführungsbeispiel im Bereich der Öffnung 34 so ausgestaltet, dass die Empfangsoptik 16 auch bei Fokusverstellungen in Kontakt zu der Frontscheibe 32 bleibt und nicht aus der Kamera 10 hinausragt.

Der Außenumfang der Empfangsoptik 16 ist als eine Art Hülse 36 ausgestaltet, die ein Schutzglas 38 als Trennung zwischen innen und außen aufweist, welches innen die Linse 20 schützt und außen die Innenkontur 28 offen und damit zugänglich lässt. Zwischen Frontscheibe 32 und Hülse 36 befindet sich ein Dichtungsring 40, der auch dabei unterstützt, die Empfangsoptik 16 in ihrer Position zu halten.

Mit Hilfe von Gehäuse 30 und Frontscheibe 32 sowie vorzugsweise Schutzglas 38 und Dichtungsring 40 erreicht die Kamera 10 eine gewünschte Schutzklasse wie IP54, IP65 oder IP67. Da sich die Innenkontur 28 außerhalb des geschützten Innenraums befindet, haben Umfokussierungen keine Auswirkung auf die Schutzklasse, und es sind jeweils keine Schritte erforderlich, danach die Schutzklasse wiederherzustellen, wie das Öffnen des Gehäuses 30, der Frontscheibe 32 oder einer Schutzkappe der Empfangsoptik 16.

Die Kamera 10 umfasst in dem Ausführungsbeispiel der Figur 1 noch weitere optionale Merkmale. Eine beispielhaft durch zwei Lichtquellen repräsentierte Beleuchtungseinheit 42 sorgt während der jeweiligen Bildaufnahme für ausreichende Lichtverhältnisse in dem Erfassungsbereich 14. Das Licht der Beleuchtungseinheit 42 gelangt durch die Frontscheibe 32 nach außen. Der gezeigte Aufbau mit der in dem Gewinde 24 gelagerten Empfangsoptik 16 mit Hülse 36 hat den Vorteil, dass keine zusätzliche Kanaltrennung zwischen Sendelicht und Empfangsobjektiv eingebaut werden muss. Die Hülse 36 dient selbst schon als Kanaltrennung.

Ein mit TOF (Time Of Flight) bezeichneter Abstandssensor 44 ist in der Lage, den Abstand zu einem Objekt in dem Erfassungsbereich 14 zu messen. Aus diesem Abstand kann eine jeweils erforderliche oder benötigte Fokuslage bestimmt werden. Der Abstandssensor 44 arbeitet mit einem Lichtlaufzeitverfahren, bei dem ein Lichtsignal ausgesandt, an dem Objekt zurückgeworfen und wieder empfangen wird. Die Lichtlaufzeit ist über die konstante Lichtgeschwindigkeit ein direktes Maß für den Abstand. Vorzugsweise wird als Abstandssensor 44 ein hochintegrierter Baustein mit Lichtsender, Lichtempfänger und erforderlicher Ansteuerung und Auswertung eingesetzt, der unmittelbar Abstandswerte ausgibt. Es gibt aber auch andere Bausteine und Messprinzipien, um den Objektabstand für eine benötigte Fokuslage zu messen.

Ein mit HALL bezeichneter Fokuspositionssensor 46 misst in Zusammenwirken mit einem Magnetelement 48, das auf der Empfangsoptik 16 mitgeführt wird, deren aktuelle Position längs ihrer optischen Achse und damit die gegenwärtige tatsächliche Fokuslage. Dies wird im Anschluss unter Bezugnahme auf die Figuren 4 und 5 noch etwas näher erläutert.

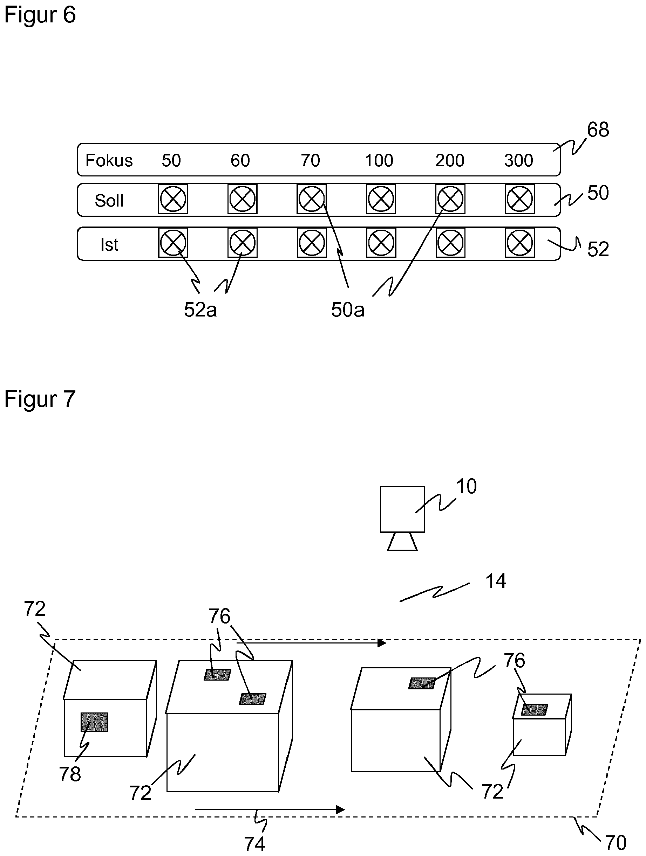

Eine erste Anzeigeeinheit 50 und eine zweite Anzeigeeinheit 52 zeigen dem Benutzer die benötigte Fokuslage und die tatsächliche Fokuslage an. Position und Form der Anzeigeeinheiten 50, 52 in Figur 1 sind rein schematisch und beispielhaft. Die Anzeige von Fokuslagen wird später unter Bezugnahme auf die Figur 6 weiter erläutert.

Eine Steuer- und Auswertungseinheit 54 ist mit den genannten elektronischen Komponenten verbunden und für die Steuerungs-, Auswertungs- und sonstigen Koordinierungsaufgaben in der Kamera 10 zuständig. Sie liest also Bilddaten des Bildsensors 18 aus, um sie zu verarbeiten und an einer Schnittstelle 56 auszugeben. Es sind auch eigene Auswertungen der Bilddaten denkbar, insbesondere das Decodieren von Codebereichen in den Bilddaten, womit die Kamera 10 zu einem kamerabasierten Codeleser wird. Die Steuer- und Auswertungseinheit 54 empfängt außerdem die Messwerte von Abstandssensor 44 und Fokuspositionssensor 46 und zeigt daraus abgeleitete benötigte und tatsächliche Fokuslagen auf den Anzeigeeinheiten 50, 52 an. Es ist denkbar, dass Abstandssensor 44 und Fokuspositionssensor 46 nicht hochintegriert sind und nur rohe Messsignale liefern, die dann in der Steuer- und Auswertungseinheit 54 weiter verarbeitet werden.

Figur 4 zeigt eine dreidimensionale Ansicht der Empfangsoptik 16 zur Erläuterung einer Ausführungsform des Fokuspositionssensors 46. Der Fokuspositionssensor 46 ist ein Hall-Sensor, vorzugsweise ein hochintegrierter Sensor auf einer Leiterkarte, der direkt Positionswerte ausgibt. Die Steuer- und Auswertungseinheit 54 ist in der Lage, solche Positionswerte, die ja zunächst nur die Position der Empfangsoptik 16 in den von dem Hall-Sensor bereitgestellten Einheiten ist, in eine Fokuslage zu übersetzen, beispielsweise durch entsprechende Messungen im Produktionsprozess, eine Umrechnungsvorschrift oder eine Nachschlagtabelle. Die Erfindung ist nicht auf einen HallSensor beschränkt, sondern umfasst auch andere Erfassungsprinzipien zur linearen Positionsbestimmung.

Das Hinein- und Herausdrehen der Empfangsoptik 16 während einer Umfokussierung bewirkt eine Verschiebung des mit der Empfangsoptik mitgeführten Magnetelements 48 unter dem Fokuspositionssensor 46. Dazu ist das hier als Magnetstreifen ausgeführte Magnetelement 48 in einem Schlitten 58 untergebracht. Der Schlitten 58 wird in einer Führung 60 durch eine nicht dargestellte Feder von hinten an eine Stufe 62 in der Hülse 36 der Empfangsoptik 16 angedrückt. Der Schlitten 58 samt Führungsstab 64 für die Führung 60 und Federstruktur kann in einem Kunststoffspritzgussteil umgesetzt sein.

Figur 5 zeigt eine weitere Ausführungsform des Schlittens 58, mittels dessen sich das Magnetelement 48 mit der Empfangsoptik 16 mitbewegt. Dieser Schlitten 58 hat eine andere Form, um zu illustrieren, dass die Erfindung nicht auf eine bestimmte Form festgelegt ist. Außerdem sind hier die Federn 66 gezeigt, mit denen der Schlitten 58 von hinten an die Hülse 36 angedrückt wird. Sie sind vorzugsweise als separate Spiralfedern ausgebildet und nicht mit dem Schlitten 58 in einem Teil umspritzt ausgeführt.

In weiteren Ausführungsformen greift der Schlitten 58 nicht von hinten an der Stufe 62 an, sondern nutzt einen alternativen Angriffspunkt, beispielsweise eine Nut in der Empfangsoptik 16 oder der Hülse 36.

Figur 6 zeigt schematisch eine mögliche Ausführungsform der Anzeigeeinheiten 50, 52 zum Visualisieren der Fokusposition. Die erste Anzeigeeinheit 50 ist für den Messwert des Abstandssensors 44 und damit den Soll-Wert einer benötigten Fokuslage, die zweite Anzeigeeinheit 52 für den Messwert des Fokuspositionssensors 46 und damit den Ist-Wert einer gegenwärtig eingestellten Fokuslage der Empfangsoptik 16 zuständig. Eine optionale Skala 68 ergänzt die Einheiten der dargestellten Fokuslagen. Sie ist in diesem Beispiel nichtlinear und könnte alternativ feiner, grober und auch linear sein.

Die Anzeigeeinheiten 50, 52 sind in diesem Fall als Lichtleisten in Form von Reihenanordnungen mehrerer Lichtquellen 50a, 52a ausgebildet, insbesondere als LED-Reihen. Es leuchtet jeweils diejenige Lichtquelle 50a, 52a auf, die am ehesten der anzuzeigenden Fokuslage entspricht. Zwischenlagen können durch Aufleuchten der beiden benachbarten Lichtquellen 50a, 52a sichtbar gemacht werden. Es ist auch denkbar, eine weitere, nicht gezeigte Lichtquelle vorzusehen, die dann aufleuchtet, wenn tatsächliche Fokuslage und benötigte Fokuslage in exakte Übereinstimmung gebracht sind, wobei eine dafür noch zulässige Toleranz vorgegeben ist. Für eine noch bessere Unterscheidbarkeit können die Anzeigeeinheiten 50, 52 verschiedene Farben verwenden. Die Anzeigeeinheiten 50, 52 können wie in Figur 1 gezeigt durch die Frontscheibe 32 in deren oberem Bereich sichtbar sein. Alternativ ist aber auch jede andere Position möglich.

Mit Hilfe der Anzeigeeinheiten 50, 52 kann die Kamera 10 wie folgt fokussiert werden: Das aufzunehmende Objekt befindet sich in einem entsprechen Abstand zu der Kamera 10 in dem Erfassungsbereich 14. Im ersten Schritt wird die Abstandsmessung des Abstandssensors 44 für eine gewisse Zeitspanne aktiviert, sei es von der Steuer- und Auswertungseinheit 54 oder auch durch Tastendruck auf einer nicht dargestellten Taste der Kamera 10 veranlasst. Der gemessene Abstandswert wird in eine zu der Skala 68 passende Einheit umgerechnet und die entsprechende Lichtquelle 50a der ersten Anzeigeeinheit aktiviert. Sie leuchtet dann beispielsweise blau und zeigt so die benötigte Fokuslage an.

Auf der zweiten Anzeigeeinheit 52 leuchtet in analoger Weise diejenige Lichtquelle 52a beispielsweise in rot, die einer von dem Fokuspositionssensor 46 gemessenen tatsächlichen Fokuslage der Empfangsoptik 16 entspricht. Im zweiten Schritt stellt nun der Benutzer durch Drehen der Empfangsoptik 16 mittels eines in die Innenkontur 28 eingreifenden Werkzeugs die tatsächliche Fokuslage auf die benötigte Fokuslage. Dazu muss lediglich die Empfangsoptik 16 so lange gedreht werden, bis das während der Drehung wandernde rote Licht auf der zweiten Anzeigeeinheit 52 mit dem blauen Licht auf der ersten Anzeigeeinheit 50 zur Deckung kommt. Sofern eine zusätzliche Lichtquelle zum Anzeigen einer innerhalb einer Toleranz exakten Übereinstimmung von tatsächlicher Fokuslage und benötigter Fokuslage vorhanden ist, kann so lange an der Empfangsoptik 16 gedreht werden, bis diese Lichtquelle aufleuchtet, wobei die Anzeigeeinheiten 50 eine sehr gute Orientierung geben, wie dafür noch zu korrigieren ist.

In einer weiteren, nicht gezeigten Ausführungsform sind beide Anzeigeeinheiten 50, 52 in einer einzigen Lichtleiste oder LED-Reihe zusammengefasst. Es leuchten dann Lichtquellen 50a, 52a an zwei verschiedenen Positionen auf, solange benötigte und tatsächliche Fokuslage noch nicht übereinstimmen. Mit Hilfe von mehrfarbigen LEDs kann sogar direkt unterschieden werden, um welchen Wert es sich jeweils handelt.

Figur 7 zeigt eine mögliche Anwendung der Kamera 10 in Montage an einem Förderband 70, welches Objekte 72, wie durch den Pfeil 74 angedeutet, durch den Erfassungsbereich 14 der Kamera 10 fördert. Die Objekte 72 können an ihren Außenflächen Codebereiche 76 tragen. Aufgabe der Kamera 10 ist, Eigenschaften der Objekte 72 zu erfassen und in einem bevorzugten Einsatz als Codeleser die Codebereiche 76 zu erkennen, die dort angebrachten Codes auszulesen, zu dekodieren und dem jeweils zugehörigen Objekt 72 zuzuordnen. Um auch seitlich angebrachte Codebereiche 78 zu erkennen, werden vorzugsweise zusätzliche, nicht dargestellte Kameras 10 aus unterschiedlicher Perspektive eingesetzt.

## Patentansprüche

1. Kamera (10), die einen Bildsensor (18) zur Erfassung von Bilddaten aus einem Erfassungsbereich (14), eine dem Bildsensor (18) vorgeordnete Empfangsoptik (16), eine Fokusverstelleinheit (24, 28) mit einem Gewinde (24) zum Verändern der Fokusposition der Empfangsoptik (16) durch eine Drehbewegung und eine Frontscheibe (32) umfasst,
**dadurch gekennzeichnet,**
**dass** die Empfangsoptik (16) einen vorderen Bereich mit Innenkontur (28) aufweist, der durch die Frontscheibe (32) zugänglich ist, um die Empfangsoptik (16) von außen in dem Gewinde (24) zu drehen und so den Fokus zu verstellen.

2. Kamera (10) nach Anspruch 1,
wobei die Frontscheibe (32) eine Öffnung (34) aufweist, so dass die Innenkontur (28) frei von außen zugänglich ist.

3. Kamera (10) nach Anspruch 1 oder 2,
wobei die Empfangsoptik (16) abgedichtet in der Öffnung (34) angeordnet ist.

4. Kamera (10) nach einem der vorhergehenden Ansprüche,
wobei die Empfangsoptik (16) ein Schutzelement (38) zwischen Innenkontur (28) und optischen Elementen (20) aufweist.

5. Kamera (10) nach einem der vorhergehenden Ansprüche,
die eine Fokuspositionsmesseinheit (46, 48) zur Bestimmung der aktuellen Position der Empfangsoptik (16) aufweist.

6. Kamera (10) nach Anspruch 5,
wobei die Fokuspositionsmesseinheit (46, 48) ein Magnetelement (48) und einen Hallsensor (46) aufweist.

7. Kamera (10) nach Anspruch 6,
wobei die Fokuspositionsmesseinheit (46, 48) ein Schlittenelement (58) mit dem Magnetelement (48) aufweist, das Schlittenelement (58) am Umfang der Empfangsoptik (16) angeordnet ist und axial von hinten mit einer Federkraft (66) an die Empfangsoptik (16, 36, 60) gedrückt ist.

8. Kamera (10) nach einem der vorhergehenden Ansprüche,
die eine Abstandsmesseinheit (44) zur Bestimmung des Abstands zu einem aufzunehmenden Objekt aufweist.

9. Kamera (10) nach Anspruch 8,
wobei die Abstandsmesseinheit (44) einen Lichtsender, einen Lichtempfänger und eine Lichtlaufzeitmesseinheit zur Bestimmung der Lichtlaufzeit eines ausgesandten und wieder empfangenen Lichtsignals aufweist.

10. Kamera (10) nach einem der vorhergehenden Ansprüche,
die eine erste Anzeigeeinheit (50) für eine Anzeige einer benötigten Fokuslage und/oder eine zweite Anzeigeeinheit (52) für eine Anzeige einer aktuellen Position der Empfangsoptik (16) aufweist.

11. Kamera (10) nach Anspruch 10,
wobei die erste Anzeigeeinheit (50) und/oder die zweite Anzeigeeinheit (52) eine Lichtleiste aufweist, insbesondere eine Reihenanordnung von Lichtquellen (50a, 52a).

12. Kamera (10) nach Anspruch 10 oder 11,
wobei erste Anzeigeeinheit (50) und zweite Anzeigeeinheit (52) mit vergleichbarer Skalierung in gegenseitiger Nachbarschaft angeordnet sind.

13. Kamera (10) nach einem der vorhergehenden Ansprüche,
die eine Steuer- und Auswertungseinheit (54) aufweist, die dafür ausgebildet ist, in den Bilddaten Codebereiche zu identifizieren und deren Codeinhalt auszulesen.

14. Verfahren zur Fokusverstellung einer Kamera (10) mit einem Bildsensor (18) und einer Frontscheibe (32), wobei die Fokuslage einer dem Bildsensor (18) vorgeordneten Empfangsoptik (16) durch eine Drehbewegung in einem Gewinde (24) verändert wird,
**dadurch gekennzeichnet,**
**dass** die Drehbewegung von außen erzeugt wird, indem mit einem Werkzeug von außen durch eine Öffnung (34) der Frontscheibe (32) in eine Innenkontur (28) an einem vorderen Bereich der Empfangsoptik (28) eingegriffen und so die Empfangsoptik (28) in dem Gewinde (24) gedreht wird.

15. Verfahren nach Anspruch 14,
wobei eine benötigte Fokuslage als Abstand zu einem aufzunehmenden Objekt und eine tatsächliche Fokuslage als Position der Empfangsoptik (16) gemessen und angezeigt werden und die tatsächliche Fokuslage durch Drehen der Empfangsoptik (16) in dem Gewinde (24) verändert wird, bis tatsächliche Fokuslage und benötigte Fokuslage übereinstimmen.

## Claims

1. A camera (10) comprising an image sensor (18) for detecting image data from a detection region (14), a reception optics (16) arranged in front of the image sensor(18), a focus adjustment unit (24, 28) having a thread (24) for changing the position of focus of the reception optics (16) by way of a rotary movement, and a front screen (32),
**characterized in that** the reception optics (16) comprises a front region having an inner contour (28) which is accessible through the front screen (32) in order to rotate the reception optics (16) from the outside in the thread (24) and to thus adjust the focus.

2. The camera (10) in accordance with claim 1,
wherein the front screen (32) has an opening (34) in such a way that the inner contour (28) is freely accessible from the outside.

3. The camera (10) in accordance with claim 1 or 2,
wherein the reception optics (16) is arranged in a sealing manner in the opening (34).

4. The camera (10) in accordance with any of the preceding claims,
wherein the reception optics (16) has a protective element (38) between the inner contour (28) and optical elements (20).

5. The camera (10) in accordance with any of the preceding claims,
further comprising a focus position measurement unit (46, 48) for determining a current position of the reception optics (16).

6. The camera (10) in accordance with claim 5,
wherein the focus position measurement unit (46, 48) has a magnetic element (48) and a hall sensor (46).

7. The camera (10) in accordance with claim 6,
wherein the focus position measurement unit (46, 48) comprises a sliding element (58) having the magnetic element (48), the sliding element (58) being arranged at the perimeter of the reception optics (16) and being pressed axially from behind with a spring force (66) towards the reception optics (16, 36, 60).

8. The camera (10) in accordance with any of the preceding claims,
further comprising a distance measurement unit (44) for determining the distance to an object to be recorded.

9. The camera (10) in accordance with claim 8,
wherein the distance measurement unit (44) has a light transmitter, a light receiver and a light time of flight measurement unit for determining a light time of flight of a light signal that is transmitted and received again.

10. The camera (10) in accordance with any of the preceding claims,
further comprising a first display unit (50) for a display of a required focus position and/or comprising a second display unit (52) for a display of a current position of the reception optics (16).

11. The camera (10) in accordance with claim 10,
wherein the first display unit (50) and/or the second display unit (52) has a light strip, in particular a series arrangement of light sources (50a, 52a).

12. The camera (10) in accordance with claim 10 or 11,
wherein the first display unit (50) and the second display unit (52) are arranged in mutual neighborhood with comparable scaling.

13. The camera (10) in accordance with any of the preceding claims,
further comprising a control and evaluation unit (54) that is configured to identify code regions in the image data and to read out their code content.

14. A method for the focus adjustment of a camera (10) having an image sensor (18) and a front screen (32), wherein the position of focus of a reception optics (16) arranged in front of the image sensor (18) is changed by a rotary movement in a thread (24),
**characterized in that** the rotary movement is generated from the outside **in that** a tool engages in an inner contour (28) at a front region of the reception optics (16) from the outside through an opening (34) of the front screen (32) and the reception optics (16) is thus turned in the thread.

15. The method in accordance with claim 14,
wherein a required focus position is measured as a spacing to an object to be recorded and an actual focus position is measured as a position of the reception optics (16) and the actual focus position is changed by a rotation of the reception optics (16) in the thread (24) until the actual focus position and the required focus position correspond to one another.

## Revendications

1. Caméra (10) comprenant un capteur d'image (18) pour acquérir des données d'image à partir d'une zone de détection (14), une optique de réception (16) disposée en amont du capteur d'image (18), une unité de réglage focal (24, 28) ayant un pas de vis (24) pour changer la position focale de l'optique de réception (16) par un mouvement de rotation, et une vitre frontale (32),
**caractérisée en ce que** l'optique de réception (16) présente une zone avant ayant un contour intérieur (28) qui est accessible à travers la vitre frontale (32) afin de faire tourner depuis l'extérieur l'optique de réception (16) dans le pas de vis (24) et de régler ainsi le foyer.

2. Caméra (10) selon la revendication 1,
dans laquelle la vitre frontale (32) présente une ouverture (34) de sorte que le contour intérieur (28) est librement accessible depuis l'extérieur.

3. Caméra (10) selon la revendication 1 ou 2,
dans laquelle l'optique de réception (16) est disposée de façon étanchée dans l'ouverture (34).

4. Caméra (10) selon l'une des revendications précédentes,
dans laquelle l'optique de réception (16) comporte un élément de protection (38) entre le contour intérieur (28) et des éléments optiques (20).

5. Caméra (10) selon l'une des revendications précédentes,
comportant une unité de mesure de la position focale (46, 48) pour déterminer la position actuelle de l'optique de réception (16).

6. Caméra (10) selon la revendication 5,
dans laquelle l'unité de mesure de la position focale (46, 48) comporte un élément magnétique (48) et un capteur à effet Hall (46).

7. Caméra (10) selon la revendication 6,
dans laquelle l'unité de mesure de la position focale (46, 48) comporte un élément coulissant (58) avec l'élément magnétique (48), l'élément coulissant (58) est disposé sur la circonférence de l'optique de réception (16) et est pressé axialement par l'arrière contre l'optique de réception (16, 36, 60) par une force élastique (66).

8. Caméra (10) selon l'une des revendications précédentes,
comportant une unité de mesure de distance (44) pour déterminer la distance par rapport à un objet à enregistrer.

9. Caméra (10) selon la revendication 8,
dans laquelle l'unité de mesure de distance (44) comprend un émetteur de lumière, un récepteur de lumière et une unité de mesure du temps de parcours de lumière pour déterminer le temps de parcours de lumière d'un signal lumineux émis et reçu.

10. Caméra (10) selon l'une des revendications précédentes,
comportant une première unité d'affichage (50) pour afficher une position focale requise et/ou une seconde unité d'affichage (52) pour afficher une position actuelle de l'optique de réception (16).

11. Caméra (10) selon la revendication 10,
dans laquelle la première unité d'affichage (50) et/ou la seconde unité d'affichage (52) comporte(nt) une barre lumineuse, en particulier un agencement en série de sources lumineuses (50a, 52a).

12. Caméra (10) selon la revendication 10 ou 11,
dans laquelle la première unité d'affichage (50) et la seconde unité d'affichage (52) sont disposées à une échelle comparable et à proximité l'une de l'autre.

13. Caméra (10) selon l'une des revendications précédentes,
comportant une unité de commande et d'évaluation (54) qui est réalisée pour identifier les zones de code dans les données d'image et pour lire leur contenu de code.

14. Procédé de réglage focal d'une caméra (10), comportant un capteur d'image (18) et une vitre frontale (32), dans lequel la position focale d'une optique de réception (16) disposée en amont du capteur d'image (18) est modifiée par un mouvement de rotation dans un pas de vis (24), **caractérisé en ce que**
le mouvement de rotation est généré depuis l'extérieur en utilisant un outil pour intervenir depuis l'extérieur dans un contour intérieur (28) sur une zone avant de l'optique de réception (28) à travers une ouverture (34) de la vitre frontale (32) et pour faire tourner ainsi l'optique de réception (28) dans le pas de vis (24).

15. Procédé selon la revendication 14,
dans lequel une position focale requise est mesurée et affichée comme la distance à un objet à enregistrer, et une position focale réelle est mesurée et affichée comme la position de l'optique de réception (16), et la position focale réelle est modifiée en tournant l'optique de réception (16) dans le pas de vis (24) jusqu'à ce que la position focale réelle et la position focale requise coïncident.
